# EUROPEAN PATENT APPLICATION

(11) **EP 1 717 504 A1**
(43) Date of publication of application: **02.11.2006**
(21) Application number: 05110325.7
(22) Date of filing: 03.11.2005
(51) Int. Cl.: F16L 37/02

(54) **Connection of two flexible thin-walled tubes**

(30) Priority: 26.04.2005 PL 37468105
(71) Applicant: Kominus Sp.z o.o., 32-015 Klaj (PL)
(72) Inventor: Chwastek, Artur, 32-015, Klaj (PL); Chwastek, Rafal, 32-015, Klaj (PL); Adamczyk, Rafal, 32-015, Klaj (PL)
(74) Representative: Grzaka, Andrzej

(57) **Abstract**

A connection of two flexible thin-walled tubes (1,6) comprising a coaxial assembly of the two tubes (1,6) the end of the tube (1) being inserted into the end of the other tube (6), wherein at least two circumferential protrusions (3,4) protruding radially outward are provided on the outer surface of the inner tube (1), the inner tube (1) further being provided with a circumferential stop (2) for abutting the end (7) of the outer tube (6), the stop (2) being formed as a semi-circular radially outward projection and the outer tube (6) being provided with a stop (8) for abutting the end of the inner tube (1), the stop (8) of the outer tube (6) being formed as a semi-circular radially inward projection adjoining a semi-circular radially outward projection.

## Description

The present invention relates to a leak-proof flexible light-wall tube fitting, especially to pipelines that can be used for taking away waste gases.

Leak-proof is of great importance as far as off-take system is concerned, especially in respect of safety considerations. Many a time the fitting must be capable of maintaining leak-proof in extreme conditions, when gas pressure is of the order of 5000 Pa.

Tube fittings are known from patent literature. One of the known solutions is described in the utility model specification W-104161. The solution is characterized in that the hub of an outer tube has an additional flaring at its end. A circumferential groove is located at the end of the hub. The groove has a circumferential rim at interior side of the hub and a circumferential offset of the diameter of the hub at the opposite side. The offset is perpendicular to the diameter of the hub. There is a clamp collar located on the outer surface of the flaring of the hub. The traverse section of the clamp is approximate to square. The clamp has a circumferential locking latch located inside at the end of its side wall and a circumferential groove with an askew circumferential rim located inside of the end face of the clamp.

The utility model Ru-60452 concerns a clamp pipe connection. A stub tube is connected to a pipe with a gripping collet. The gripping collet covers the region of definite surface structure of the stub tube under the first clamp surface and at least one self-sealing ring. The self-sealing ring is situated inside the groove of the stub tube, under the second clamp surface. The self-sealing ring has a circular cross-section. The pressure of the clamp surfaces is equal to the acceptable deformation of the self-sealing ring. One more self-sealing ring can be mounted without additional pressure between the clamp surfaces.

The pipe joint known from the utility model specification W-111890 is provided with a socket having a bar inside. The end of the smooth tube is located at one side of the bar, and at the opposite side of the bar the end of the double-walled tube is located. At the end of the smooth tube a spacer ring is mounted. The spacer ring is an element of the double-walled tube. The double-walled tube has a ring gasket inside.

Another known solution is described in the Polish patent application 338717. The fitting according to the application has a body consisting of an union piece and an outer collet. The collet has a tapped region on its fastening end, and so has the union piece. The two tapped regions are adjacent. Furthermore, the collet has at least one circumferential groove with a sealing ring inside. The groove is situated at the fastening end of the collet, opposite to its working part. The one-piece fitting which has a central element and at least two outer collets and has adjacent tapered regions at the fastening end of the collet and at the fixing surface of the central element.

The Polish patent application P-348866 shows a fitting assembly for joining double-walled tubes manufactured from a smooth inner tube and a corrugated outer tube. The tubes make a whole. To one end of the outer tube a socket is mounted. The socket has a monolithic wall and its surface is adapted for holding the end of the tube. The assembly contains a pin element. The pin element has its monolithic wall, which is smooth inside and outside. The monolithic wall of the pin is connected to the monolithic wall of the socket. The inner part of the socket fits the outer surface of the tube.

The Polish patent specification 164618 describes a tube made of plastic material, metal or other materials. The end of the tube works as a profiling punch. The tube has a tapered region. Due to this region the outer diameter of the tube is diminished to the inner diameter of the connected tube. The connected tube works as a matrix. On the tapered region, from the inserted end to the nominal diameter of the tube, at least one resistance belt is provided. The belt works as a bearing surface for butting face of another tube.

The Polish patent specification 183026 describes a chimney tube. The tube consists of a few pieces. Each piece has one flared end and one converging tapered end. They connected together by inserting the converging ends into the flared ends. In order to make manufacturing of the tube pieces easier and to obtain exact shape of the cones, the converging tapered ends are widened and their diameters are bigger than the diameters of the tube pieces.

The disadvantage of the aforementioned solutions is the necessity of using additional band clips or sealing rings which makes the assembly difficult. Furthermore, the known solutions do not guarantee full leak-proof at pressure of the order of 5000 Pa.

The technical problem which is to be solved is to obtain a flexible light-wall tube fitting which guarantees leak-proof of axial connections.

The gist of the solution according to the present invention is characterized in that the fitting has at least two crosswise circumferential bulgings, diameters of which increase gradually. The bulgings are located on the outer surface of the end of the the inner tube region. The bulging is concave at its first part and it is protruding at its second part. The outer tube region is provided with an outer abutting orifice in the shape of a semicircular bulging which is concave at first part and it turns into a semicircular protruding bulging at its second part. The outer tube region has an askew circumferential forking on its rim.

It has appeared, that pressing the bulged region into the smooth tube of the same diameter having an askew circumferential forking on its rim creates a small extension of the flexible outer tube and a deformation of the bulgings of the inner tube at the same time. The unforeseeable result of the invention is high value of leak-proof of the fitting.

The advantage of the flexible light-wall tube fitting according to the present invention is that the invention enables to solve the problem of leak-proof without using additional clamp belts or sealing rings.

The problem was solved by making the fitting provided with a few transverse bulgings, diameters of which increase. The bulgings are situated on the outer surface of the inner region of the joint. Circumferential stress which appears after pressing the tube having bulging into the part of the smooth tube causes flexible deformation of the circumferential bulgings, which guarantees high leak-proof value of the fitting.

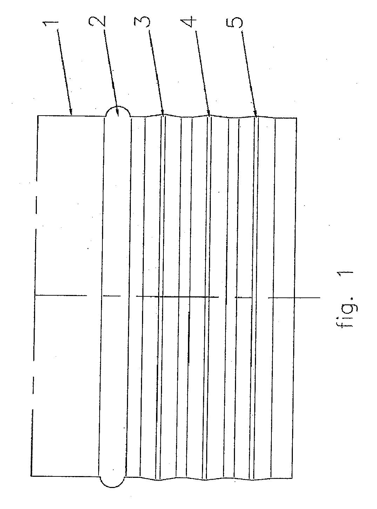

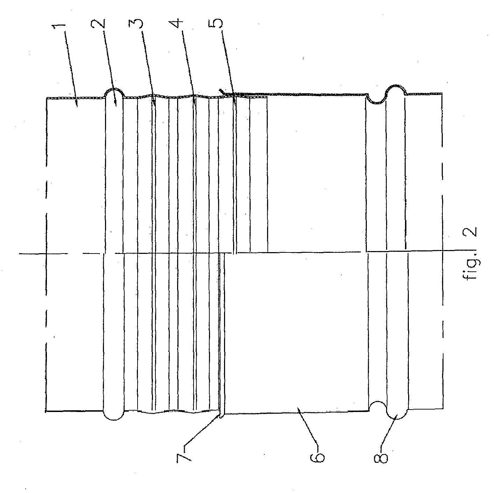

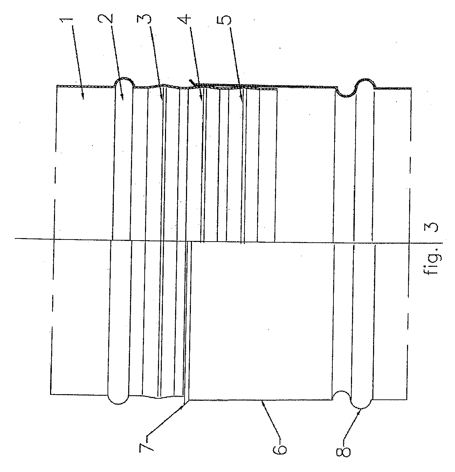

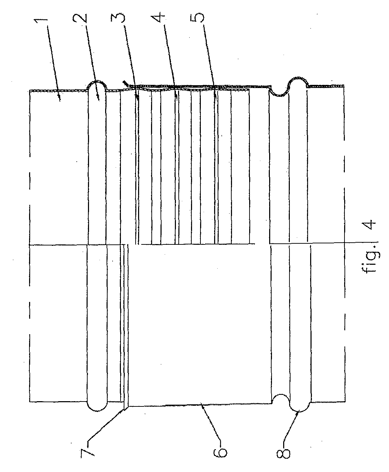

The solution according to the invention will become more fully understood from the detailed description and the accompanying drawings, wherein fig. 1 is a view of an inner part of the fitting before joining, fig.2 to fig.5 shows the following stages of the joining in half section.

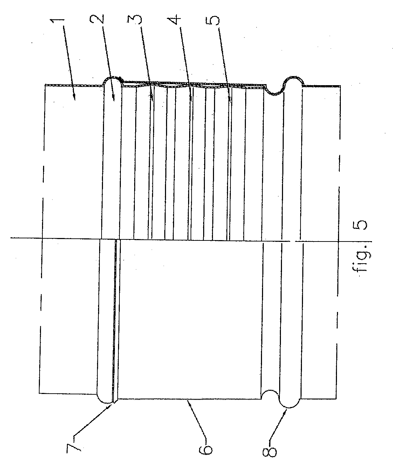

The flexible pressure tube fitting according to the invention consists of a hub joint of two regions of the tubes; the inner tube region 1 fig.5, is pressed into the region of the outer tube 6 fig.5. The inner tube region 1 fig.5 is provided with an abutting orifice 2 and three circumferential bulgings, the diameters of which decrease from the abutting orifice 2 to the beginning of the region. The smooth region of the outer tube 6 fig.5 of the fitting and an abutting orifice 8 make a socket. The diameter of the smooth region of the outer tube 6 is equal to the outer diameter of the inner tube region 1. The outer tube region 6 fig.5 has a semicircular concave circumferential bulging .The bulging works as the abutting orifice of the socket. The bulging transverse from concave to protruding at its second part. The socket has an askew forking 7 on its rim, which facilitates pressing in the inner tube region 1 ,which has three circumferential bulgings 3, 4, 5. The diameters of the bulgings increase from the beginning of the region to the abutting orifice. The forking 7 pressing the abutting orifice 2 causes an additional sealing effect.

The tube fitting according to the invention can be applied in industrial plants or outside a plant, using proper tools facilitating pressing the end of the tube into the socket.

The stress which appears in the fitting after assembling guarantees the leak-proof of the fitting up to the pressure 5000Pa without additional sealing compounds.

## Claims

1. Flexible light-wall tube fitting comprising a hub assembly of two regions **therein** at the outer side of the inner tube region (1) of the coaxial tube assembly there are at least two transverse circumferential bulgings (3, 4), and the inner tube region (1) is provided with an outer abutting orifice of the shape of semicircular circumferential transverse bulging (2) protruding outside and the outer tube region is provided with an abutting orifice (8) of the shape of semicircular bulging which is concave at its first part and then transforms to a semicircular bulging protruding outside.

2. Flexible light-wall tube fitting according to claim 1, **wherein** the fitting is provided with transverse circumferential bulgings, diameters of which increase gradually from the beginning of the inner tube region (1) to the abutting orifice (2).

3. Flexible light-wall tube fitting according to claim 1, **wherein** the outer tube region (6) is provided with an askew circumferential forking (7) on its rim.
